# EUROPÄISCHE PATENTSCHRIFT

(11) **EP 0 501 234 B1**
(45) Veröffentlichungstag und Bekanntmachung des Hinweises auf die Patenterteilung: **11.09.1996**
(21) Anmeldenummer: 92102374.3
(22) Anmeldetag: 13.02.1992
(51) Int. Cl.: G01L 7/02, G01L 9/00

(54) **Verfahren und Vorrichtung zur Messung eines Innendrucks in einem Schlauch**
Method and apparatus for measuring internal pressure in a tube
Procédé et appareil pour mesurer la pression intérieure dans un tuyau

(30) Priorität: 28.02.1991 DE 4106444
(43) Veröffentlichungstag der Anmeldung: 02.09.1992
(73) Patentinhaber: Fresenius AG, D-61350 Bad Homburg (DE)
(72) Erfinder: Steinbach, Bernd, Dr., W-6380 Bad Homburg (DE); Flaig, Hans-Jürgen, Dr., W-6420 Lauterbach (DE)
(74) Vertreter: Fuchs, Luderschmidt & Partner Patentanwälte

(56) Entgegenhaltungen:
- EP-A- 0 335 385
- EP-A- 0 401 524
- DE-C- 3 838 689
- GB-A- 2 198 239

## Beschreibung

Die Erfindung bezieht sich auf ein Verfahren und eine Meßanordnung zur Messung eines Innendrucks in einem Schlauch und im speziellen auf ein Verfahren, bei welchem der Schlauch mit einer vorgegebenen Vorspannkraft senkrecht zur Schlauchachse den Schlauch verformend vorgespannt wird und Änderungen des Innendrucks durch Änderungen der Vorspannkraft bestimmt werden.

Bei vielen medizinischen Anwendungszwecken ist es erforderlich, den Druck in einem durchströmten Schlauch zu ermitteln. Das durch den Schlauch strömende Medium kann dabei beispielsweise Blut sein, in anderen Anwendungsfällen ist es jedoch auch möglich, daß der Druck einer sonstigen Flüssigkeit wie beispielsweise Dialysierflüssigkeit, einer mit Medikamenten versehenen Flüssigkeit oder einer Nährlösung bestimmt werden muß.

Insbesondere bei einem extrakorporalen Blutkreislauf eines Dialysegerätes ist es aus Sicherheitsgründen erforderlich, den Druck in dem System zu überwachen. Üblicherweise reicht auf der arteriellen Seite im einfachsten Fall ein sogenannter Druck-Kissenschalter aus, während auf der venösen Seite eine hohe Anzeigegenauigkeit erforderlich ist. Ein typischer Wert für den Meßbereich beträgt 0 bis + 40 kPa (0 bis 300 mm Hg). Die Auslösewerte liegen beispielsweise bei + / - kPa (7,5 mm Hg).

Aus dem Stand der Technik ist es bekannt, zur Druckmessung in einem Schlauch mittels eines T-Stückes eine Stichleitung an dem Schlauch anzuschließen, welche zum Teil mit Luft gefüllt ist. Am freien Ende der Druck-Stichleitung ist ein Hydrophobfilter vorgesehen, um Kontaminationen zu vermeiden. Das Schlauchende ist weiterhin üblicherweise mittels einer genormten Luer-Lock-Kupplung mit einem Drucksensor gekoppelt. Daraus ergibt sich der Nachteil, daß ein relativ aufwendiges Schlauchsystem mit dem T-Stück erforderlich ist, wobei weiterhin zusätzlich der Hydrophobfilter und der Luer-Lock-Adapter erforderlich sind. Weiterhin ist es für das Bedienungspersonal umständlich, das Schlauchsystem an den Drucksensor bzw. Monitor anzuschließen. Insbesondere bei ungeübtem Personal besteht weiterhin die Gefahr, daß der arterielle und der venöse Drucksensor vertauscht werden, so daß das Steuerungssystem aufgrund falscher Datenvorgaben arbeitet. Ein weiterer, wesentlicher Nachteil dieser Ausgestaltungsform liegt darin, daß sich in der Stichleitung das Fluid, welches den Schlauch durchströmt, sammelt. Bei der Durchströmung der Stichleitung mit Blut besteht dabei die Gefahr, daß das Blut gerinnt, da in der Stichleitung im wesentlichen keine Strömung vorliegt.

Aus dem Stand der Technik sind weiterhin Druckschalter bekannt, welche an einem Schlauch eines Infusionsgerätes angebracht sind. Derartige Druckschalter dienen jedoch wegen der großen Meßungenauigkeit nur als schaltendes, nicht jedoch als messendes Element. Eine Druckmessung ermöglicht aber eine Verfahrensüberwachung und -steuerung bei der Infusion von Flüssigkeiten.

Es sind weiterhin Druckmeßvorrichtungen vorgeschlagen worden, bei welchen der Schlauch von seinem runden Querschnitt in einen elliptischen Querschnitt verformt wird, wobei diese Verformung durch Aufbringen einer Vorspannkraft erfolgt. Druckänderungen im Inneren des Schlauches führen zu einer Veränderung der Vorspannkraft, welche gemessen und in Relation zu dem Innendruck in dem Schlauch gesetzt werden kann. Bei dieser vorgeschlagenen Vorgehensweise ist es ungünstig, daß das Kunststoffmaterial systembedingt zu Kriechvorgängen neigt, so daß bei einem längeren Meßvorgang, zusätzlich zu der Temperaturabhängigkeit, die den E-Modul des Kunststoffschlauches beeinflußt, ein Langzeit-Kriechen des Schlauchmateriales auftritt. Dies führt bei längerer Meßzeit zum Abfall der Einspannkraft bei gleichbleibendem Einspannweg und gleichbleibendem Innendruck in dem Schlauch. Das Langzeit-Kriechverhalten hängt u. a. von der Dimensionierung des Schlauches und von dem Kunststoffmaterial ab. Insbesondere bei PVC-Schläuchen, welche wegen ihres ökonomischen Vorteils besonders häufig bei medizinischen Schlauchanordnungen verwendet werden, ergeben sich Kriechwerte, welche in der Größenordnung des zu messenden Drucksignales liegen, so daß eine derartige Druckmessung vielfach nicht möglich ist.

Aus der DE-C1 38 38 689 ist eine Druckmeßvorrichtung bekannt, bei welcher ein Schlauch zwischen einer feststehenden Backe und einer federnd belasteten Backe elastisch verformend eingespannt ist. Wird der Schlauch mit Druck beaufschlagt, verformt er sich und bewegt dabei die federnd belastete Backe. Aus dieser Bewegung wird der Druck im Schlauch ermittelt. Diese Vorrichtung hat allerdings den Nachteil, daß ein Langzeit-Kriechen des Schlauchmateriales das Meßergebnis verfälscht.

Der Erfindung liegt die Aufgabe zugrunde, ein Verfahren und eine Meßanordnung eingangs genannten Art zu schaffen, welche bei einfachem Aufbau und einfacher, leichter Handhabbarkeit eine zuverlässige Druckmessung auch bei Schläuchen ermöglichen, deren Material ein Kriechverhalten aufweist.

Hinsichtlich des Verfahrens wird die Aufgabe erfindungsgemäß dadurch gelöst, daß der Schlauch vor Durchführung der Druckmessung über einen längeren Zeitraum verformend vorgespannt wird.

Das erfindungsgemäße Verfahren zeichnet sich durch eine Reihe erheblicher Vorteile aus. Da der Druck bereits über einen langen Zeitraum vor Aufbringung des eigentlichen Prüfdruckes auf den Schlauch aufgebracht wird, kann das Langzeit-Kriechen des Schlauchmateriales bereits rechtzeitig einsetzen und ist somit im wesentlichen abgeschlossen, bis der eigentliche Meßvorgang stattfindet. Bei üblichen PVC-Schläuchen, welche im medizinischen Bereich verwendet werden, klingt der Kriechvorgang innerhalb weniger Stunden ab, so daß beispielsweise nach einer Einspannzeit von 5 Tagen nicht mehr mit einem Langzeit-Kriechen des Schlauchmateriales zu rechnen ist. Somit läßt sich diese Fehlerquelle der Messung durch das erfindungsgemäße Verfahren gänzlich eliminieren.

Da die Vorspannung des Schlauches bereits bei seiner Konfektionierung erfolgen kann, liegt zwischen der Fertigstellung des Schlauchsystemes und der Anwendung ein ausreichend langer Zeitraum für das Abklingen des Kriechens.

Als Vorteil ergibt sich somit, daß eine sehr genaue Druckmessung am Schlauch vorgenommen werden kann, ohne daß das Schlauchmaterial durch Kriechvorgänge Meßfehler herbeiruft. Im Vergleich zu bisher bekannten Systemen ergibt sich somit eine sehr einfache Handhabung des Schlauchsystemes, da weiterhin ein kostengünstiges PVC-Material verwendbar ist, sind die Gesamtkosten ausgesprochen niedrig. Im Vergleich zu den Meßverfahren, bei welchen ein Druck in einem Abzweigschlauch gemessen wird, besteht eine sehr günstige Strömungsführung, weiterhin wird jegliche Kontaminationsgefahr ausgeräumt.

In einer günstigen Ausgestaltung der Erfindung wird der Schlauch in gleicher Weise wie bei der nachfolgenden Messung über den längeren Zeitraum vorgespannt. Es erfolgt somit eine gleiche geometrische Verformung des Schlauches, so daß Änderungen in der Schlauchgeometrie zwischen dem Vorspannvorgang und dem eigentlichen Meßvorgang nicht auftreten. Weiterhin ist es besonders günstig, wenn die Endvorspannung die gleiche Druckbelastung ergibt, wie die Einspannung des Schlauches bei dem nachfolgenden Meßvorgang.

Günstig ist es weiterhin, wenn der Schlauch zumindest bis zum Abklingen des Langzeit-Kriechens vorgespannt wird, er kann jedoch auch über einen wesentlich längeren Zeitraum mit der Vorspannung beaufschlagt sein, da dies nicht zu weiteren Änderungen des Schlauchmateriales führt. Die Vorspannung muß bis kurz vor Beginn des Meßvorgangs erhalten bleiben.

Erfindungsgemäß wird zumindest der zur Messung benötigte Teil des Schlauches vorgespannt, es ist jedoch auch möglich, einen größeren Schlauchbereich vorzuspannen und damit den Kriechvorgang auszusetzen.

Bezüglich der Vorrichtung zum Vorspannen des Schlauchs, die Bestandteil der erfindungsgemäßen Meßanordnung ist, ist zur Lösung der zugrundeliegenden Aufgabe vorgesehen, daß diese eine erste und eine zweite Backe umfaßt, mit Hilfe derer der Schlauch eingespannt werden kann. Die erste und zweite Backe weisen zueinander einen Abstand auf, welcher kleiner ist, als der unverformte Durchmesser des Schlauches, welcher jedoch im wesentlichen dem Abstand entspricht, welcher durch die beiden Meßbacken während des Meßvorganges aufgebracht wird. Es liegen somit erfindungsgemäß identische Vorspann-Belastungsverhältnisse vor, wie bei dem eigentlichen Meßvorgang, so daß der Schlauch in gleicher Weise verformt und in seinem Querschnitt verändert wird.

Um die Vorspannvorrichtung bereits während der Herstellung der Schlauchanordnung an der entsprechenden Stelle an dem Schlauch anbringen zu können, ist es besonders günstig, wenn die erste und die zweite Backe mittels eines Trägers gelagert sind, welcher fest an dem Schlauch vorgesehen ist. Zur nachfolgenden Durchführung des Meßvorganges ist es dann lediglich erforderlich, die zweite oder die erste und die zweite Backe von dem entsprechenden Schlauchstück zu entfernen. Dies ist beispielsweise dadurch möglich, daß die erste und zweite Backe gegeneinander bewegbar am Träger gelagert sind. Es ist jedoch auch möglich, die erste und die zweite Backe einstückig miteinander auszubilden, so daß sich ein im wesentlichen Uförmiges Klemmelement ergibt, welches längsverschiebbar mittels des Trägers an dem Schlauch gelagert ist. Das Klemmelement kann somit zur Durchführung der eigentlichen Druckmessung längs des Schlauches verschoben werden.

Im folgenden wird die Erfindung anhand eines Ausführungsbeispiels in Verbindung mit der Zeichnung beschrieben. Dabei zeigt:
- Fig. 1: eine Seitenansicht eines ersten Ausführungsbeispiels der erfindungsgemäßen Vorspannvorrichtung,
- Fig. 2: eine stirnseitige Ansicht des in Fig. 1 gezeigten Ausführungsbeispiels,
- Fig. 3: eine Draufsicht auf ein zweites Ausführungsbeispiel der erfindungsgemäßen Vorrichtung und
- Fig. 4: eine stirnseitige Ansicht, auf die in Fig. 3 linke Seite des in Fig. 3 gezeigten Ausführungsbeispiels.

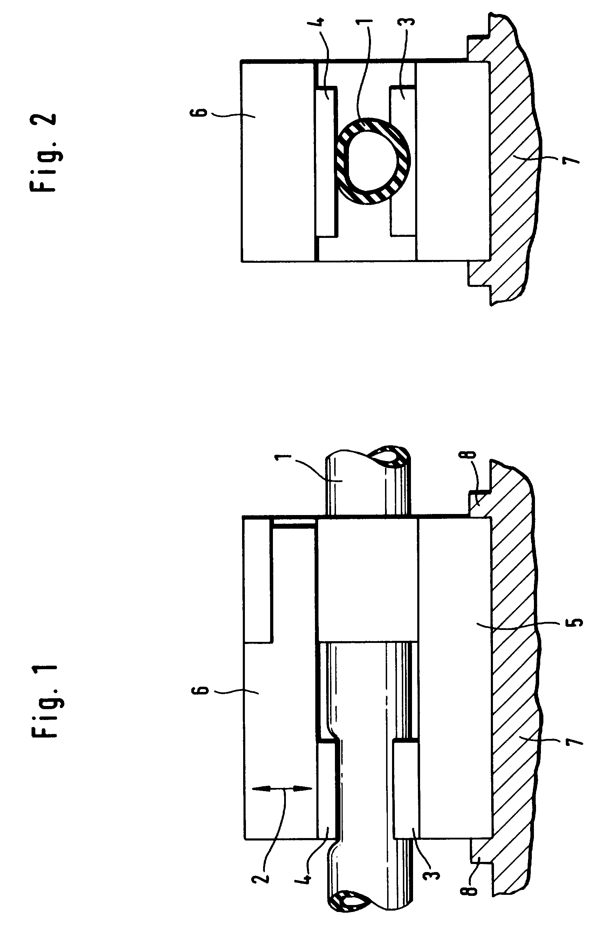

Die erfindungsgemäße Vorspannvorrichtung umfaßt gemäß dem in den Fig. 1 und 2 gezeigten Ausführungsbeispiel eine erste Backe 3 und eine zweite Backe 4, welche zueinander einen Freiraum aufweisen, in welchem ein Schlauch 1 so eingespannt ist, daß der Schlauch einen im wesentlichen elliptischen oder zusammengedrückten, nicht jedoch kreisförmigen Querschnitt aufweist. Bei dem gezeigten Ausführungsbeispiel ist die Unterseite der zweiten Backe 4 in Form einer ebenen Fläche ausgebildet, während die erste Backe 3 eine teilkreisförmige Nut aufweist, in welche der Schlauch 1 eingelegt werden kann. Die durch die Doppelpfeile 2 dargestellte Vorspannkraft belastet die erste und die zweite Backe 3, 4 gegeneinander, so daß der Schlauch 1 verformt wird. Die erste Backe 3 ist, wie in Fig. 1 und 2 schematisch gezeigt, an einem Träger 5 gelagert, welcher fest mit dem Schlauch 1 verbunden ist, beispielsweise durch Verkleben. Der Träger 5 ist an ein Joch 6 abnehmbar angeordnet. Das Joch 6 trägt die Backe 4, so daß diese, wie durch den Vorspannkraft-Pfeil 2 gezeigt, senkrecht zu dem Schlauch 1 gegen diesen vorgespannt werden kann. Bei Durchführung der Messung ist es beispielsweise lediglich erforderlich, die zweite Backe 4 durch eine Meßbacke zu ersetzen. Alternativ hierzu kann jedoch auch die Meßvorrichtung zwischen die zweite Backe 4 und das Joch 6 eingebracht werden.

Die Positionierung und Fixierung des Schlauchs 1 in der Meßvorrichtung 7 erfolgt durch den am Schlauch 1 befestigten Träger 5, der in die Befestigungen 8 an der Meßvorrichtung 7 eingreift.

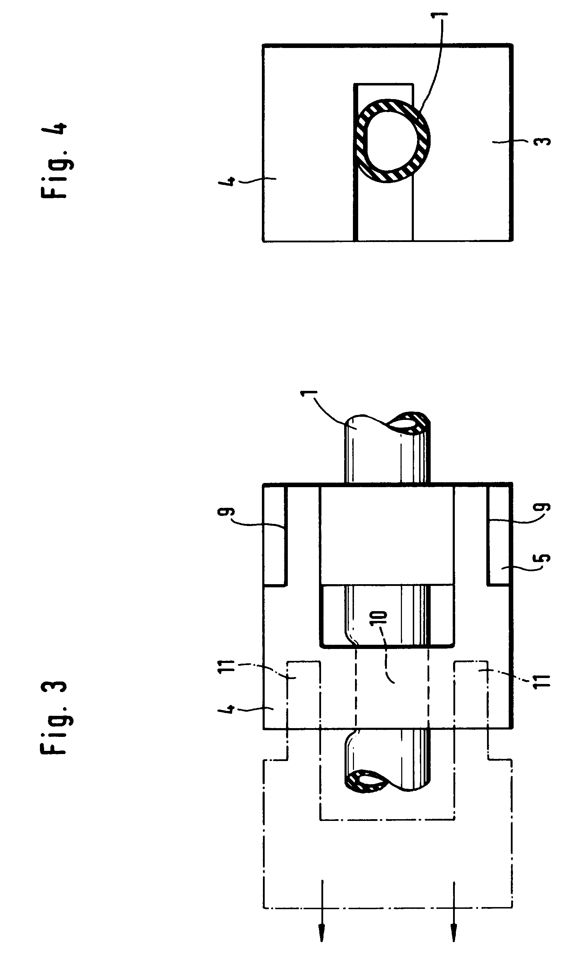

Das zweite, in den Fig. 3 und 4 gezeigte Ausführungsbeispiel unterscheidet sich von dem Ausführungsbeispiel gemäß den Fig. 1 und 2 dadurch, daß die erste und zweite Backe 3, 4 einstückig miteinander verbunden sind und ein im wesentlichen U-förmiges Vorspannelement bilden, so wie dies in Fig. 4 qezeigt ist. Das Vorspannelement ist über einen oder mehrere Bolzen 8, welche in den oder die Nuten 9 des Trägers 5 verschiebbar geführt sind, in Längsrichtung des Schlauches 1 verschiebbar. In Fig. 3 zeigt die gestrichelte Darstellung beispielsweise den Vorspannzustand der ersten und zweiten Backe 3, 4, während mit der ausgezogenen Linie ein zurückgeschobener Zustand der ersten und zweiten Backe dargestellt ist, so daß ein Schlauchbereich 10 zur Druckmessung freigegeben wird, um an diesem Schlauchbereich die Druckmeßbacken anzuordnen.

Die Positionierung und Fixierung der Meßvorrichtung 7 am Schlauch 1 erfolgt durch den fest am Schlauch befestigten Träger 5.

Die erfindungsgemäße Vorrichtung kann somit in sehr einfacher Weise bereits bei der Konfektionierung des Schlauches an diesem angebracht werden und verbleibt an dem Schlauch, bis der eigentliche Meßvorgang beginnt.

Die Erfindung ist nicht auf die gezeigten Ausführungsbeispiele beschränkt, vielmehr ergeben sich für den Fachmann im Rahmen der Erfindung vielfältige Abwandlungs- und Modifikationsmöglichkeiten.

## Patentansprüche

1. Verfahren zur Messung eines Innendrucks in einem Schlauch, bei welchem der Schlauch (1) mit einer vorgegebenen Vorspannkraft senkrecht zur Schlauchachse den Schlauch (1) verformend vorgespannt wird und Änderungen des Innendrucks durch Änderungen der Vorspannkraft bestimmt werden, **dadurch gekennzeichnet**, daß der Schlauch (1) vor Durchführung der Druckmessung zumindest bis zum Abklingen des Langzeit-Kriechens verformend vorgespannt wird.

2. Verfahren nach Anspruch 1, **dadurch gekennzeichnet**, daß der Schlauch (1) in gleicher Weise wie bei der nachfolgenden Messung zumindest bis zum Abklingen des Langzeit-Kriechens vorgespannt wird.

3. Verfahren nach Anspruch 1 oder 2, **dadurch gekennzeichnet**, daß zumindest der zur Messung benötigte Teil des Schlauchs (1) vorgespannt wird.

4. Verfahren nach einem der Ansprüche 1 bis 3, **dadurch gekennzeichnet**, daß der Schlauch (1) mit der gleichen Druckbelastung bei dem Meßvorgang vorgespannt wird.

5. Meßanordnung zur Messung eines Innendrucks in einem Schlauch mit
einer Meßvorrichtung (7), die ein Druckmeßelement zum Messen der Änderungen einer auf den Schlauch (1) aufgebrachten Vorspannkraft aufweist und
einer Vorrichtung zum Vorspannen des Schlauchs (1) senkrecht zur Schlauchachse bis zum Abklingen des Langzeit-Kriechens mit einer ersten und einer zweiten Backe (3, 4), welche in gegenseitigem Abstand bringbar sind, der kleiner als der Durchmesser des unverformten Schlauchs (1) ist und während des Vorspannens konstant ist, wobei die erste und/oder zweite Backe (3, 4) gegen das Druckmeßelement der Meßvorrichtung (7) austauschbar ausgebildet sind.

6. Meßanordnung nach Anspruch 5, **dadurch gekennzeichnet**, daß die erste (3) und die zweite (4) Backe gegeneinander bewegbar an einem am Schlauch (1) gelagerten Träger angeordnet sind.

7. Meßanordnung nach Anspruch 5, **dadurch gekennzeichnet**, daß die erste (3) und die zweite (4) Backe einstückig miteinander verbunden und an einem am Schlauch (1) gelagerten Träger (5) längs des Schlauches (1) verschiebbar angeordnet sind.

8. Meßanordnung nach Anspruch 5, **dadurch gekennzeichnet**, daß ein Vorspannelement, bestehend aus den beiden Backen (3, 4), über einen oder mehrere Bolzen (8) in einer oder mehreren Nuten (9) im Träger (5) geführt wird.

9. Meßanordnung nach Anspruch 5, **dadurch gekennzeichnet**, daß der Träger (5) zur Positionierung des Schlauches (1) an der Meßvorrichtung (7) dient.

## Claims

1. A method for measuring an internal pressure in a flexible tube, in which said flexible tube (1) is biased at a given biasing forcing in a direction perpendicular to the tube axis, so that said flexible tube (1) is deformed, and changes in the internal pressure are determined through variations of the biasing force, characterized in that said flexible tube (1) is deformingly biased before the pressure measurement is carried out at least until long-time creep dies away.

2. A method according to claim 1, characterized in that said flexible tube (1) is biased in the same way as in the subsequent measurement at least until long-time creep dies away.

3. A method according to any one of claims 1 to 3, characterized in that at least the part of said flexible tube (1) required for the measurement is biased.

4. A method according to any one of claims 1 to 4, characterized in that said tube (1) is biased at the same pressure load as during the measuring operation.

5. An apparatus for measuring an internal pressure in a flexible tube with a measuring device (7) having a pressure measuring element for measuring the changes of the biasing force applied to said flexible tube (1) and a means for biasing said flexible tube (1) perpendicular to the tube axis until long-time creep dies away, further having a first and a second jaw (3, 4), said jaws being adapted to be spaced apart from each other at a distance which is smaller than the undeformed diameter of said flexible tube (1), with said first and/or second jaw (3, 4) being embodied such that it is interchangeable by the pressure measuring element of the measuring device.

6. An apparatus according to claim 5, characterized in that said first and second jaws (3, 4) are disposed on a carrier mounted on said flexible tube (1), in such a way that they are movable relative to each other.

7. An apparatus according to claim 5, characterized in that said first and second jaws (3, 4) are integrally connected to each other and displaceably arranged along said flexible tube (1) on a carrier (5) mounted on said flexible tube (1).

8. An apparatus according to claim 5, characterized in that the biasing element consisting of said jaws (3, 4) is guided via one or several pins (8) in one or several grooves (9) provided in said carrier (5).

9. An apparatus according to claim 5, wherein said carrier (5) serves to position said flexible tube (1) on said measuring device (7).

## Revendications

1. Procédé pour mesurer la pression intérieure dans un tuyau selon lequel on précontraint en le déformant le tuyau (1) en appliquant une force de précontrainte prédéterminée perpendiculairement à l'axe du tuyau (1) et on détermine des variations de la pression intérieure obtenue sous l'effet de modifications de la force de précontrainte, caractérisé en ce qu'on précontraint le tuyau (1) en le déformant, au moins jusqu'à disparition du fluage de longue durée, avant d'exécuter la mesure de pression.

2. Procédé selon la revendication 1, caractérisé en ce qu'on précontraint le tuyau (1) de la même manière que lors de la mesure ultérieure, au moins jusqu'à disparition du fluage de longue durée.

3. Procédé selon la revendication 1 ou 2, caractérisé en ce qu'on précontraint au moins la partie, qui est nécessaire pour la mesure, du tuyau (1).

4. Procédé selon l'une des revendications 1 à 3, caractérisé en ce qu'on précontraint le tuyau (1) avec la même contrainte de pression lors de l'opération de mesure.

5. Dispositif de mesure pour mesurer une pression intérieure dans un tuyau, comportant
un dispositif de mesure (7), qui possède un élément dynamométrique pour mesurer des variations d'une force de précontrainte appliquée au tuyau (1), et
un dispositif pour précontraindre le tuyau (1) perpendiculairement à son axe, jusqu'à disparition du fluage de longue durée, comportant des première et seconde mâchoires (3,4), qui peuvent être amenées à une distance réciproque inférieure au diamètre du tuyau déformé (1) et qui est constante pendant l'application de la précontrainte, la première et/ou la seconde mâchoire (3,4) étant agencées de manière à pouvoir remplacer l'élément dynamométrique du dispositif de mesure (7).

6. Dispositif de mesure selon la revendication 5, caractérisé en ce que la première mâchoire (3) et la seconde mâchoire (4) sont disposées sur un support monté sur le tuyau (1), de manière à être déplaçables réciproquement.

7. Dispositif de mesure selon la revendication 5, caractérisé en ce que la première mâchoire (3) et la seconde mâchoire (4) sont reliées entre elles d'un seul tenant et sont disposées sur un support (5) monté sur le tuyau (1), de manière à être déplaçables le long du tuyau (1).

8. Dispositif de mesure selon la revendication 5, caractérisé en ce qu'un élément de précontrainte constitué par les deux mâchoires (3,4) est guidé par l'intermédiaire d'un ou de plusieurs goujons (8) dans une ou plusieurs rainures (9) dans le support (5).

9. Dispositif de mesure selon la revendication 5, caractérisé en ce que le support (5) sert à positionner le tuyau (1) sur le dispositif de mesure (7).
